Europäisches Patentamt

European Patent Office

Office européen des brevets

(19)

(11) Veröffentlichungsnummer: **0 414 176 A1**

# (12) EUROPÄISCHE PATENTANMELDUNG

(21) Anmeldenummer: **90115870.9**

(22) Anmeldetag: **18.08.90**

(51) Int. Cl.⁵: **G01K 17/12**

(30) Priorität: **19.08.89 DE 8909930 U**

(43) Veröffentlichungstag der Anmeldung:
**27.02.91 Patentblatt 91/09**

(84) Benannte Vertragsstaaten:
**AT BE CH DE DK ES FR GB GR IT LI LU NL SE**

(71) Anmelder: **Bopp & Reuther Aktiengesellschaft**
**Carl-Reuther-Strasse 1**
**D-6800 Mannheim 31(DE)**

(72) Erfinder: **Kremer, Gerd**
**Alemannenweg 65**
**D-6800 Mannheim-Wallstadt(DE)**
Erfinder: **Becker, Rudolf**
**Philip Scheidemannstrasse 67**
**D-6700 Ludwigshafen/Rh(DE)**

(74) Vertreter: **Fritsch, Klaus, Dipl.-Ing.**
**Richard Wagner Strasse 1a**
**D-6701 Hochdorf-Assenheim 2(DE)**

(54) **Wärmezähler.**

(57) Ein Wärmezähler besitzt einen Volumen- Durchflußzähler (14, 15) und eine Einrichtung (21, 19) zur Messung der Temperaturen zwischen dem Vorlauf (20) und dem Rücklauf (12) in einer Wärmeversorgungsanlage. Innerhalb des Wärmezählers befindet sich eine Auswerte und Anzeigeeinheit (17, 18; 24, 25). Zur Versorung der einzelen elektrischen Komponenten mit Energie besitzt der Wärmezähler auch eine Energieversorgungseinheit (26) in Form einer Batterie.

Damit der Wärmezähler an einer möglicherweise schlecht zugänglichen Stelle untergebracht sein kann und die Ablesung trotzdem einfach erfolgt, ist die Auswerteeinheit (17, 18) innerhalb einer lösbar am Gehäuse des Durchflußzählers befestigten Haube (46) untergebracht, wogegen die Anzeigeeinheit (24, 25) und die Energieversorgungseinheit (26) getrennt von diesem Gehäuse mit der Haube in einem Zusatzgehäuse (23) untergebracht sind.

Fig. 1

Die Erfindung betrifft einen Wärmezähler nach dem Oberbegriff des Anspruches 1.

Ein Wärmezähler, mit dem die aus einer als Wärmeträger dienenden Flüssigkeit entnommene Wärmemenge gemessen werden kann, besitzt eine Einrichtung zur Zählung des Durchflußvolumens z.B. in Form eines Flügelradzählers, wie er aus der DE-PS 33 40 508 bekannt geworden ist, so wie eine Einrichtung zur Messung der Temperaturen des Vorlaufes und des Rücklaufes, d.h., der Temperatur der zum Verbraucher geführten Flüssigkeit und der Temperatur der vom Verbraucher rückfliessenden Flüssigkeit.

Aus der gemessenen Durchflußvolumenmenge und der Temperaturdifferenz zwischen den Temperaturen von Vor- und Rücklauf wird die Wärmemenge berechnet.

Ein bekannter Wärmezähler besitzt ein Gehäuse mit einem Flügelradzähler, dessen Zulauf- und Ablaufstutzen den Einbau in ein Leitungsrohr für eine Wärmeträgerflüssigkeit dient. Im Ablaufstutzen befindet sich eine Öffnung für einen Thermofühler. Auf das Gehäuse wird ein Kasten aufgesetzt, in dem eine Auswerte- , Anzeige- und Energieversorgungseinheit untergebracht sind. Der Kasten kann auch getrennt vom Gehäuse angeordnet sein.

Aufgabe der Erfindung ist es, einen Wärmezähler der eingangs genannten Art zu schaffen, bei dem einerseits die Anwendbarkeit verbessert und andererseits die Herstellbarkeit vereinfacht ist.

Diese Aufgabe wird erfindungsgemäß gelöst durch die kennzeichnenden Merkmale des Anspruches 1.

Erfindungsgemäß also ist der Rechner des Durchflußzählers von dem Anzeigegerät und von der Energieversorgungseinheit getrennt; beide können demgemäß in einer großen Entfernung voneinander eingesetzt werden, so daß der Wärmezähler auch dann eingesetzt und benutzt werden kann, wenn der Einbauplatz für häufiges Ablesen mehr oder weniger schlecht zugängig ist. Dadurch, daß die Anzeigeeinheit ausreichend weit von dem Einbauort entfernt sein kann, kann die verbrauchte Wärmemenge zu jeder beliebigen Zeit und auf leicht zugängliche Weise abgelesen werden. Das gleiche gilt auch dann, wenn der Akkumulator oder die Batterie der Energieversorgungseinheit ausgetauscht werden muß: Dadurch, daß die Energieversorgungseinheit ebenso wie die Anzeigeeinheit ausreichend weit vom Einbauort des Wärmezählers selbst entfernt ist, ist der Austausch sehr einfach.

Das bekannte Gehäuse bzw. der bekannte Kasten weist -wegen des Vorsehens der Anzeigeeinheit und der Aufnahme der Energieversorgungseinheit-einen Außenumfang auf, der größer als der Außenumfang des Gehäuses des Wärmezählers ist. Aufgrund der Trennung des Wärmezählers von der Anzeigeeinheit und der Energieversorgung kann die Abdeckhaube dem Umfangsrand des Volumen-Durchflußzählergehäuses angepasst sein, so daß sie auf einfache Weise mit einem Überwurfring am Umfangsrand des Gehäuses festlegbar ist. Der Überwurfring wirkt mit dem Gehäuse bajonettverschlußartig zusammen und zusätzlich ist erfindungsgemäß ein Rastelement vorgesehen, mit dem der Überwurfring unverdrehbar festlegbar ist.

Eine weitere vorteilhafte Ausgestaltung der Erfindung geht dahin, daß im Bereich des Napfbodens der Haube in deren Innerem ein Teil einer Steckkupplung befestigt ist, mit der der andere Teil der Steckkupplung, an dem eine Verbindungsleitung zur Anzeige- und Energieversorgungseinheit angeschlossen ist, von außen, die Haube durchgreifend, kuppelbar ist. Dies hat den Vorteil, daß der Anschluß die äußere Kontur des Gehäuses nicht vergrößert, so daß der relativ geringe Raumbedarf oberhalb des Volumendurchflußzählergehäuses eingehalten werden kann.

Die Energieversorgungs- und Anzeigeeinheit ist erfindungsgemäß n einem abgedichteten Gehäuse untergebracht, das mit dem Volumenzähler mit der Auswerteeinheit lediglich mittels der Verbindungsleitung in Verbindung steht. Die Versorgungsleitungen zwischen der Energieversorgungseinheit und der Auswerteeinheit sind in die Verbindungsleitung integriert, so daß keine zusätzliche Energieversorgungsleitung erforderlich wird. Das Gehäuse zur Aufnahme der Energieversorgungs- und Anzeigeeinheit besitzt ein Gehäuseunterteil und ein damit verbundenes Gehäuseoberteil, das letztere ist in bevorzugter Weise zumindest im Bereich einer Anzeige und einer Leuchtdiodenanzeige klar durchsichtig ausgebildet.

Anhand der Zeichnung, in der ein Ausführungsbeispiel der Erfindung dargestellt ist, sollen die Erfindung sowie weitere vorteilhafte Ausgestaltungen und Verbesserungen der Erfindung näher erläutert und beschrieben werden.

Es zeigt:

Fig. 1 eine Schnittansicht durch einen erfindungsgemäßen Wärmezähler und

Fig. 2 eine schematische Darstellung des Wärmezählers mit der Anzeigeeinheit.

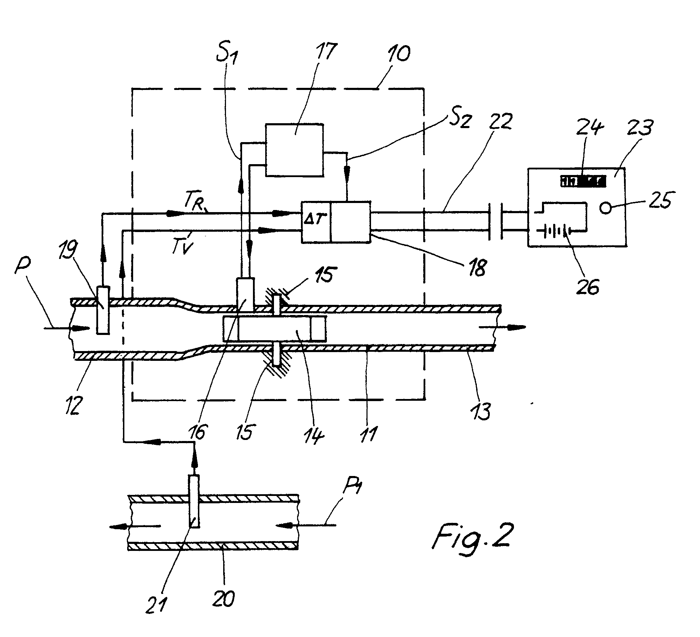

Es sei nun zunächst Bezug genommen auf die Fig. 2. Ein Wärmezähler 10, der in dem strichliert eingerahmten Kasten untergebracht ist, besitzt - schematisch- in seinem Inneren einen Durchflußkanal 11 mit einem Eingangsstutzen 12 und einem Ausgangsstutzen 13. Im Inneren des Wärmekanals befindet sich ein Flügelrad 14, das von der gemäß Pfeilrichtung P durchströmenden Flüssigkeit in Drehung versetzt wird. Zu diesem Zweck ist das Flügelrad 14 in Lagerstellen 15 beidseitig gelagert.

Auf dem Flügelrad 14 sitzen nicht näher dargestellte Mittel, die dann, wenn sie unter einem Sensor 16 hindurchlaufen, diesen aktivieren, so daß der Sensor ein Signal S1 abgibt, welches ein Maß für die Umdrehungszahl des Flügelrades 14 ist. Dieses Signal wird einem Teiler 17 zugeführt, der einen Speicher aufweist, und dann, wenn eine bestimmte Menge an Signalen S1 in den Teiler bzw. den im Teiler befindlichen Speicher eingelesen ist, ein Signal S2 abgibt, das ein Maß für die durchfließende Flüssigkeitsmenge ist. Dieses Signal S2 wird einer Auswerteeinheit 18 zugeführt.

Im Einlaufstutzen 12 ist ein Temperaturfühler 19, der die Temperatur des Rücklaufes TR, also der Flüssigkeitsmenge mißt, die vom Verbraucher hindurchströmt, eingesetzt. Neben dem Wärmezähler 10 ist eine Rohrleitung 20 dargestellt, in der die von einer Wärmequelle kommenden wärmeren Flüssigkeit zu einem Verbraucher wird. In dieser Vorlaufleitung 20 befindet sich ein weiterer Thermofühler 21, dessen Ausgangssignal TV ein Maß für die Temmperatur der Flüssigkeit in der Vorlaufleitung 20 ist. Die beiden Temperatursignale TV, TR werden der Auswerteeinheit 18 zugeführt, in der die Temperaturdifferenz $\Delta T$ errechnet wird. Weiterhin wird in der Auswerteeinheit 18 aus den beiden Werten S2 und der Temperaturdifferenz die Wärmemenge errechnet. Aus dem Wärmezähler 10 ist eine Verbindungsleitung 22 herausgeführt, die mit einem Gehäuse 23 verbunden ist, in dem eine Anzeigeeinheit in Form einer numerischen Anzeige 24 und einer Leuchtdiode 25 untergebracht ist. Innerhalb des Gehäuses 23 befindet sich weiterhin auch eine Batterie 26, die zur Energieversorgung sowohl der Anzeigeeinheiten 24 und 25, der Energieversorgung der Auswerteeinheit 18, des Teilers 17 und des Sensors 16 dient. Innerhalb der Verbindungsleitung 22 ist demgemäß auch eine Versorgungsleitung für die drei Komponenten.

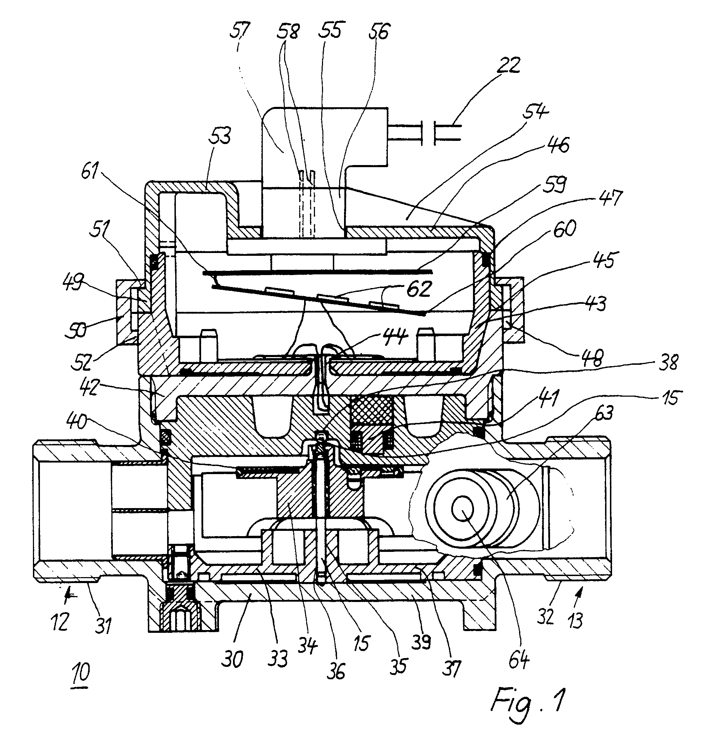

Man erkennt aus der Fig. 2 , daß der Wärmezähler 10 von dem Gehäuse 23 getrennt und dabei nur über die Verbindungsleitung verbunden ist; diese Verbindungsleitung kann unter anderem bis zu 5 mtr. oder gegebenenfalls auch länger ausgebildet sein. Der Thermofühler kann natürlich auch in dem Auslaufstutzen 13 eingebaut sein, wie aus Fig. 1 ersichtlich ist.

Die Fig. 1 zeigt den Wärmezähler 10 in detaillierter Form. Der Wärmezähler 10 besitzt ein Gehäuse 30, das -entsprechend der ihn durchfließenden Flüssigkeit - aus Messing oder ggfls. auch anderen Materialen hergestellt sein kann. Das Gehäuse 10 besitzt den Eingangsstutzen 12 und den Auslaufstutzen 13, die hier mit einem Außengewinde 31 bzw. 32 versehen sind, damit sie in eine eine Wärmeträgerflüssigkeit führende Leitung eingesetzt werden können. In das Gehäuse 30 ist ein Meßeinsatz 33 eingesetzt, der ein Flügelrad 34 aufweist, welches mittels Auflagerungen 15 in dem Meßeinsatz aufgelagert ist. Zu diesem Zweck besitzt das Flügelrad 34 (in Fig. 2 ist dies das Flügelrad 14) eine Welle 35, die nach unten in eine Sacklochbohrung 36 in einem Meßeinsatzgehäuse 37 eingelegt und darin geführt ist; die obere Lagerung ist eine Kugellagerung 38, die zur oberen Führung bzw. zur Verhinderung einer axialen Verschiebung der Welle 35 dient.

An dem dem Gehäuseboden 39 entgegengesetzten Ende des Flügelrades sind Taktgeberelemente 40 vorgesehen, die mit einem Sensor 41 derart zusammenwirken, daß jedesmal , wenn ein Taktgeberelement 40 sich unter dem Sensor 41 vorbeibewegt, ein Signal abgegeben wird, welches über nicht näher dargestellte Leitungen zu einer Auswerteeinheit (siehe weiter unten) geleitet wird.Die vom Sensor 41 abgegebenen Signale sind die Signale S1.

Oberhalb des Meßeinsatzgehäuses ist ein Verschlußteil 42 in das oben geöffnete Gehäuse 30 eingeschraubt, welches aus dem gleichen Material besteht wie das Gehäuse 30 selbst und mit dem Verschlußteil 42 ist ein Gehäusenapf 43 festverbunden, vorzugsweise über eine Umbördelung 44, der zur Aufnahme des Teilers 17 sowie der Auswerteeinheit 18 dient. Der Gehäusenapf 43 überragt dabei den Verschlußteil 42 und bildet mit diesem einen Rücksprung 45, gegen den eine Haube 46 angelegt wird, wobei die Haube 46 den freien Rand des Gehäusenapfs 43 unter Zwischenfügung einer Dichtung 47 dicht umfasst. Am Verschlußteil 42 sind nasenartige Vorsprünge 48 angebracht und die Haube 46 besitzt an ihrem freien Rand einen vorspringenden umlaufenden Bord bzw. eine umlaufende Leiste 49, deren Außendurchmesser dem Hüllaußendurchmesser der Vorsprünge 58 gleicht. Über die Haube 46 ist ein Überwurfring 50 geschoben, der im Querschnitt eine U-Form mit zwei Schenkein 51 und 52 aufweist, zwischen welchen Schenkein 51 und 52 die Leiste 49 bzw. die Vorsprünge 48 liegen. Die Vorsprünge 48 sind gleichmäßig am Umfang verteilte Vorsprünge und die Schenkel 52 sind entsprechend den Vorsprüngen 48 nur jeweils an einem Teil des Überwurfringes vorgesehen, so daß der Überwurfring 50 über die Vorsprünge 48 geschoben werden kann. Durch Verdrehen werden die Schenkel 50 hinter die Vorsprünge, 48 gedreht, so daß eine Verbindung zwischen der Haube und dem Verschlußteil hergestellt ist.

Die Haube 46 besitzt an ihrem Haubenboden 53 einen eingezogenen Bereich 54, in dem ein Durchbruch 55 vorgesehen ist, in dem ein erster Teil 56 einer Steckkupplung, diese durchgreifend, befestigt ist. In diesen ersten Teil 56 der Steckkupplung wird ein Stecker 57 eingesetzt, wobei zur Verbindung von den beiden Teilen 56 und 57 und insbesondere zur elektrisch leitenden Verbindung Steckerstifte 58 vorgesehen sind. An dem freien inneren Stirnende des Teiles 56 ist eine erste Leiterplatte 59 befestigt, die mit einer zweiten Leiterplatte 60 über Verbindungsleitungen 61 in Verbindung steht; auf der zweiten Leiterplatte sind elektrische Bauelemente 62 angeordnet.

Man erkennt aus der Fig. 1, daß die Haube 46 in ihrer äußeren Kontur im wesentlichen dem Gehäuse 30 bzw. dem Verschlußteil 42 angepasst ist, so daß der maximale äußere Durchmesser des Gehäuses selbst im wesentlichen von der Haube 46 nicht überragt wird.

An dem Stutzen 13 befindet sich ein Querstutzen 63 mit einer Bohrung 64, in die der Thermofühler 19 einfügbar ist. Nicht dargestellt in der Fig. 1 sind die Verbindungsleitungen zwischen den Thermofühlern und der Auswerteeinheit 17/18 und nicht dargestellt ist auch die Bohrung, durch die diese Verbindungsleitungen ins Innere der Haube 46 eingeführt werden.

Mit dem erfindungsgemäßen Gehäuse bzw. erfindungsgemäßen Wärmezähler wird ein relativ kleines Wärmezählergehäuse gebildet und die Fernanzeige ist ebenfalls, wie aus der Fig. 2 ersichtlich, leicht anzubringen.

## Ansprüche

1. Wärmezähler mit einem Volumen-Durchflußzähler, mit einer Einrichtung zur Messung der Temperaturen zwischen Vorlauf und Rücklauf, mit einer dem Volumendurchflußzähler zugeordneten Auswerte- und Anzeigeeinheit, in der aus dem pro Zeiteinheit durchfließenden Volumenstrom und der Temperaturdifferenz die verbrauchte Wärmemenge errechnet und angezeigt wird, und mit einer Energieversorgungseinheit für die Auswerte- und Anzeigeeinheit, dadurch gekennzeichnet, daß die Auswerteeinheit (17,18) innerhalb einer lösbar am Gehäuse (30) des Durchflußzählers befestigten Haube (46) untergebracht ist und daß die Anzeigeeinheit und die Energieversorgungseinheit (24,25; 26) getrennt von dem Gehäuse mit der Haube in einem separaten Zusatzgehäuse (23) untergebracht sind.

2. Wärmezähler nach Anspruch 1, dadurch gekennzeichnet, daß die napfförmig ausgebildete Haube (46) mit ihrem freien Rand dem Umfangsrand des Volumen-Durchflußzählergehäuses (30) angepasst und an diesem mit einem Überwurfring (50) am Umfangsrand befestigt ist.

3. Wärmezähler nach Anspruch 2, dadurch gekennzeichnet, daß der Umfangsrand am Volumendurchflußzählergehäuses (30) radial vorspringende Vorsprünge 48) aufweist, hinter die radial nach innen weisende Rücksprünge (51) am Überwurfring zwecks Befestigung in Art eines Bajonettverschlusses greifen.

4. Wärmezähler nach Anspruch 2 oder 3, dadurch gekennzeichnet, daß der Überwurfring mittels eines Rastelementes unverdrehbar festlegbar ist.

5. Wärmezähler nach einem der vorigen Ansprüche, dadurch gekennzeichnet, daß im Bereich des Napfbodens der Haube (46) in deren Innerem ein Teil einer Steckkupplung (56,57) befestigt ist, mit der der andere Teil der Steckkupplung, an dem eine Verbindungsleitung (22) zur Anzeige und Energieversorgungseinheit (23) angeschlossen ist, von außen die Haube durchgreifend kuppelbar ist.

6. Wärmezähler nach einem der vorigen Ansprüche, dadurch gekennzeichnet, daß die Energieversorgungs- und Anzeigeeinheit (24,25,26) in einem abgedichten Gehäuse untergebracht sind, das mit dem Volumenzähler mit Auswerteeinheit lediglich mit der Verbindungsleitung (22) in Verbindung steht.

7. Wärmezähler nach Anspruch 6, dadurch gekennzeichnet, daß das Zusatzgehäuse aus einem Gehäuseunterteil und einen damit verbundenen Gehäuseoberteil gebildet ist, welches zumindest teilweise im Bereich einer numerischen Anzeige und gegebenenfalls einer Leuchtdiodenanzeige klar durchsichtig ist.

Fig. 1

Fig. 2

Europäisches Patentamt

# EUROPÄISCHER RECHERCHENBERICHT

Nummer der Anmeldung

EP 90115870.9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| X | DE - A1 - 2 522 163 (BOSCH) * Fig. 1,2; Seite 3,4 * | 1,6 | G 01 K 17/12 |
| A | | 2 | |
| A | GB - A - 1 210 193 (TOPART) * Fig. 1,3 * | 1,2,6 | |

RECHERCHIERTE SACHGEBIETE (Int Cl⁵)

G 01 K 17/00

Der vorliegende Recherchenbericht wurde für alle Patentansprüche erstellt.

| Recherchenort | Abschlußdatum der Recherche | Prüfer |
|---|---|---|
| WIEN | 29-10-1990 | BURGHARDT |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82